(19) Europäisches Patentamt / European Patent Office / Office européen des brevets

(11) **EP 3 078 611 A1**

(12) **EUROPEAN PATENT APPLICATION**

(43) Date of publication:
**12.10.2016 Bulletin 2016/41**

(51) Int Cl.:
**B65F 1/00** *(2006.01)*　　**B65F 1/14** *(2006.01)*

(21) Application number: **15382171.5**

(22) Date of filing: **09.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fomento de Construcciones y Contratas, S.A.**
**08007 Barcelona (ES)**

(72) Inventor: **Ricardo, Arribas de Paz**
**21819 La Rábida - Huelva (ES)**

(74) Representative: **Carvajal y Urquijo, Isabel et al**
**Clarke, Modet & Co.**
**Suero de Quiñones, 34-36**
**28002 Madrid (ES)**

(54) **SOLID WASTE CLASSIFICATION SYSTEM**

(57) A system to classify waste material that comprises: a number of ultrasonic transmitters (2) located on different planes, each configured to emit a signal directed at the material; methods for weighing the material; a number of ultrasonic receivers (3), each configured to receive the signal reflected by or transmitted through the material; processing methods configured to calculate the speed of propagation and the reduction in amplitude of the received signal and to compare with a number of patterns corresponding to different types of waste through an artificial neural network in order to classify the material.

Fig. 2

## Description

*Technological field*

This invention falls within the category of temporary waste collection and separation technology and aims to respond to the good waste separation practices of responsible users and to make waste management easier for the companies who provide this urban service.

*Background*

Of all urban services, waste collection is one of the most important to optimise in terms of ensuring quality of life in urban areas.

In Europe, separate collection became an obligation for public institutions after the approval of Directive 2008/98/CE on waste. This has created the opportunity to design various solutions for making better use of the public space allocated to collection and for making it easier for citizens to separate waste.

The temporary urban waste collection systems that are currently most common in Spain are passive containers marked with different colours, notices and specific formats for disposing of each type of waste. These are either buried or found at street level.

This passive solution relies on the good will and civic pride of citizens to diligently separate the waste they produce. The current unification of rates, established by the administrative bodies without taking into account the effects on selection, creates little motivation to stick to the system and also fails to follow the commonly accepted principle of "who pollutes, pays". Furthermore, this type of container often causes sanitation problems due to the build-up of waste, a sense of dirtiness, bad odours and the amount of public space they take up.

In addition, poor selection standards at source mean that waste management companies are required to conduct additional selection processes at treatment plants to increase re-use, recycling and evaluation. This process is also necessary because waste generally arrives at treatment/transfer plants enclosed in bags/containers that need to be broken open and removed before selection.

One of the biggest problems created by poor separation is the high percentage of impurities associated with organic waste. This situation causes low productivity and variable functionality of biomethanation processes. It also reduces the quality of the compost created through this process, which then accumulates like any other waste due to lack of use.

To counter this situation, various inventions have been created that aim to resolve the above-mentioned issues.

Firstly, Spanish patent ES 2 139 503 for a system that covers the detection, signalling, opening and closing of bins and/or containers for the collection of organic waste depending on whether the bag containing said waste is the colour defined for such purpose.

A variation of this system is seen in patent ES 2 378 615, which defines a selective system for collecting domestic waste with automatic recognition of waste products based on a system of codes printed on the various items that will be recycled and equipped with code readers, electronic components and display devices that actively guide the user through the recycling process.

Other patents, such as WO 2011/070603 and EP0799152, define systems that use a device to identify the user, open the containers and weigh the waste, together with memory systems to store data on user activity. This type of device can be seen in a wide range of systems that include other inventive solutions such as sensors to monitor how full containers are, buried containers and specific collection devices, compacting systems, etc.

However, none of these inventions includes a system that ensures the quality of the actual separation of the waste deposited in the different containers and none is able to differentiate between different types of waste deposited via a single head unit while allowing for material to be deposited with no type of bag/container.

The proposed system is designed to facilitate and control the procedure for transferring domestic waste to waste processing companies and to improve sanitation and use of public space.

*Description of the invention*

The invention described below is a system that automatically classifies various types of waste, including solid urban waste, green waste, livestock waste, etc.

It can be installed alongside buried containers for collecting the types of urban waste that are most commonly produced by citizens.

Ultrasound will be used to classify the different types of waste. There are countless benefits to ultrasonic testing and virtually no limit to how it can be used and the problems it can resolve. The only requirement is a suitable transducer; that is, the operating frequency, the excitation rate and the type of ultrasonic beam convergence.

The subject-matter of the invention is a waste classification system as per the independent claim.

Advantageous or special versions of the invention are defined in the dependent claims.

*Brief description of the figures*

    FIG.1 shows a perspective view of the entire system.
    FIG.2 shows a detailed view of the system in use.

*Detailed description of one operating mode*

An example of the preferred implementation is given below using the figures for reference. However, this should not be considered as the only operating mode.

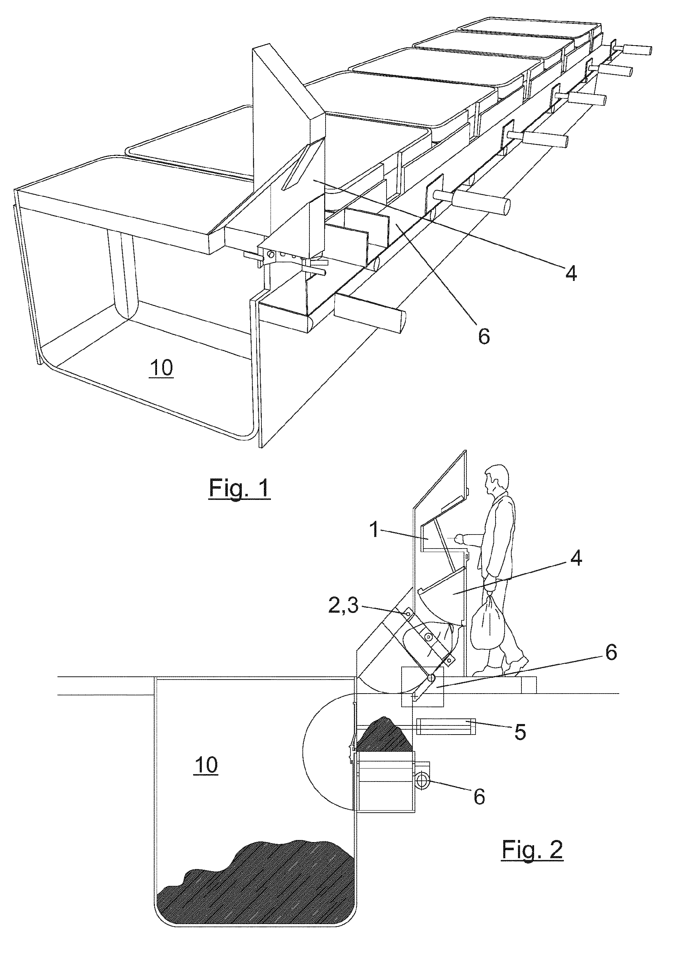

FIG.1 shows the various sets of containers **10** with a shared access slot **4** for all containers on the head unit. A transporter belt **6** positions the classified material in the corresponding container **10**.

FIG. 2 shows a cross section of the different parts of the system. The system for classifying urban waste includes a number of ultrasonic transmitters **2.** In the preferred implementation of the invention, six of these transmitters are embedded on a ring that surrounds the bag in which the waste is collected. Each transmitter **2** emits an adjustable ultrasonic signal, the frequency of which varies between 20 kHz and 1 MHz depending on the material the signal is transmitted through. The system also includes a number of ultrasonic receivers **3.** In the preferred implementation of the invention, six of these are embedded on the same ring as referred to above, diametrically opposite the transmitters. Each receiver receives the signal that is transmitted through the waste. In the preferred implementation, the measured data are the speed of propagation and the reduction in amplitude of the wave after passing through the material, which together with the weight of the waste, form the input vector to a pattern recognition system; in this case, an artificial neural network trained by an expert supervisor.

In an alternative implementation of the invention, twelve ultrasonic transducers embedded on the ring are transmitters/receivers. An ultrasonic signal is sent from an ultrasonic transducer to the material and the echo signal is processed in the frequency domain through Discrete Fourier Transform (DFT). Analysis of the frequency spectrum will provide the characteristics of the material and will subsequently be identified by an artificial neural network trained by an expert supervisor.

The spectrogram is generated through impedance coupling (TL084 operational circuit) used to prevent parasitic reflections in the transducer, forth-order low-pass Butterworth filters with a cut-off frequency of 20 kHz, also with TL084 operational circuits. An offset circuit is also used that basically consists of a voltage divider and a summer that ensures the input signal remains on a DC 2.5 V signal. This is required because the proposed analogue-to-digital converter is single pole; that is, it works from 0 to +5 volts. To prevent the analogue-to-digital converter from being damaged by an unwanted spike, a limiter circuit is used. This device stops the voltage from exceeding +5 volts. The output from the analogue-to-digital converter (ADC-0820) is connected to an interface buffer between the digital data and the parallel port of a PC. The converter uses a 320 kHz clock signal to obtain the greatest number of samples possible of the signal in order to clearly display signal variation. Subsequently, a digital-to-analogue converter (DAC-0800) is used to display the entire process. The monostable circuits needed for the transducer to function are located on the excitation block. The head unit of the system is situated at street level and is the visible part of the system. This unit is controlled by an automatic operating system in which the operating procedures are defined and the data is collected from the different devices that make up the full system Citizen identification methods **1** are installed on the head unit, therefore the citizens who can use a certain head unit will be assigned and identified in advance. As such, positive identification will be required to open the enclosure where the bags of rubbish will be deposited. This could be via a card reader, in the preferred implementation, through a numeric code or, in an alternative implementation, a fingerprint reader.

Positive user identification will open the collection slot cover **4** where the bags of rubbish will be deposited. From this point onward, the waste will go through the following process:

1. Bag weigh: the base of the collection tank has load sensors to weigh the rubbish bags. Weight data will be recorded in the system database. Activation of the load sensors will close the slot cover. The bag is weighed for two purposes: firstly, to create an inventory and a list of characteristics of the waste generated in the area of influence of the sorter, which can be used to help schedule container **10** collection and cleaning cycles and, secondly, as a component of the characteristic vector in the case of the preferred implementation through transmitters and receivers.

2. Waste identification: in the preferred implementation of the invention, a polygonal matrix of 12 ultrasonic transmitters/receivers **2.3** will be located on the periphery of the enclosure in which the bag is deposited. This matrix will be activated once the cover on the head unit has closed. With the information collected by the ultrasonic receivers, a spectrogram is generated through impedance coupling (TL084 operational circuit) used to prevent parasitic reflections in the transducer, forth-order low-pass Butterworth filters with a cut-off frequency of 20 kHz, also with TL084 operational circuits. An offset circuit is also used that basically consists of a voltage divider and a summer that ensures the input signal remains on a DC 2.5 V signal. This is required because the proposed analogue-to-digital converter is single pole; that is, it works from 0 to +5 volts. To prevent the analogue-to-digital converter from being damaged by an unwanted spike, a limiter circuit is used. This device stops the voltage from exceeding +5 volts. The output from the analogue-to-digital converter (ADC-0820) is connected to an interface buffer between the digital data and the parallel port of a PC. The converter uses a 320 kHz clock signal to obtain the greatest number of samples possible of the signal in order to clearly display signal variation. Subsequently, a digital-to-analogue converter (DAC-0800) is used to display the entire process. The monostable circuits needed for the transducer to function are located on the excitation block.

The spectrograms of sound transmission in the different planes are recorded and analysed by a microprocessor through a system of pre-trained neural networks that will determine identification of the waste, comparing it with the previous patterns established in the system training. Identification will depend on the type of patterns, which in turn depends on the policy of use of the system as a whole.

The system of neural networks that is most effective for dealing with pattern identification problems has been chosen, while the genetic algorithms are the most suitable for prediction or optimisation problems. In the context of neural networks, learning can be seen as a process of adjusting the free parameters of the network. Based on a set of random synaptic weights, the learning process seeks out a set of weights that will allow the network to correctly perform a specific task. The learning process is an iterative process in which the solution is continuously refined until a sufficient operating level is achieved.

If the bibliography on neural networks is reviewed, the most commonly used architecture is the *Multilayer Feedforward* (MF). The MF neural network is made up of three or more neural layers: an input layer, one or more hidden layers and an output layer. As such, the preferred implementation of the invention uses a MF neural network with backpropagation learning algorithm and hyperbolic tangent sigmoid transfer function. The way the backpropagation learning algorithm works can be briefly summarised as follows: firstly, the Mean Square Error (MSE) is defined. The MSE measures the difference between the result provided by the network for a specific example $P(t_{P;k})$ and the objective of this example $|OO_{P;k}|$:

$$E_P = \sum_{k=1}^{N_s} \left( t_{P;k} - oo_{P;k} \right)^2$$

The total error will be the sum, for all patterns, of the errors committed in the above equation. The learning process involves minimising (with regard to the weights) the error function for all patterns in the training set. These patterns are presented to the network in successive iterations until error function convergence is achieved. The inputs to the output neurons will be a lineal combination of the output of the hidden neurons and the output of each neuron is obtained by applying a transfer function to each combination. The transfer function for the preferred implementation of the invention is the hyperbolic tangent sigmoid defined as:

$$f(x) = \frac{2}{1 + e^{-2x}} - 1$$

Within MF neural networks, the number of hidden layers and the number of neurons on the different layers (input, hidden and output) are known as the network architecture. Although it is often said that there are no criteria whatsoever for choosing the optimal network architecture for a specific classification problem, the following criteria have been established for the preferred design of this invention:

The input layer will be formed by a number of neurons decided by the number or amount of information that we want to process with the network (information characteristics). This layer simply transfers the input information inside the network. Its neurons are fully interconnected with the hidden layers. In terms of its size, we suggest the input characteristic vector be as small as possible while still being able to adequately perform the classification task (i.e. without affecting efficiency). There are a number of benefits to minimising the input set. Firstly, by reducing the number of inputs, we also reduce the final size of the neural network that is used, thus simplifying the model employed to resolve the problem. Secondly, we reduce the amount of data that needs to be collected and processed after training; that is, when the network is already in use. This will cut down the cost of our practical application of the network.

Thirdly, it will reduce training time since the network architecture is smaller (less weights and input units). Ultimately, it gives us a lower computing cost.

Finally, the network's generalisation capacity can be increased; that is, we can boost the efficiency of the built application. This outcome, which has been seen in various studies, is achieved reducing the size of the network by only providing useful information (not redundant), thus making the learning task easier.

In this case, for the preferred implementation based on 6 transmitters, 6 receivers and the weight of the bag, we will use an input vector of 7 components, for which 7 input neurons will be used. This is a relatively small number when compared to input vectors for other implementations based on spectral analysis, which often require input vectors of 70 or more components.

As for the output layer, since we are aiming to resolve a classification problem, the number of units on this layer is usually chosen so it coincides with the number of classes of the classification problem: one neuron is assigned to each class as this is believed to achieve greater immunity to the noise of the inputs. Therefore, the number of output neurons will be 6.

Finally, when establishing the number of hidden layers and the corresponding number of neurons, the following criteria have been established for the preferred implementation:

    1. The introduction of more than one hidden layer reduces the generalisation capacity of the network.

    2. There is a theorem on neural networks which guarantees that a perceptron network with a hidden layer can resolve any problem if it has the right number of neurons on each layer.

3. Networks will less parameters have a greater generalisation capacity than those with more neurons than the bare minimum required to resolve the problem.

4. In problems with overlapping, it is not possible to determine, a priori, a suitable success threshold.

5. Theoretical studies have proven that when the number of hidden units is equal to the number of training examples less one, the backpropagation error surface is guaranteed to have no local minima.

6. A study by Kwok et al. explains that constructive algorithms, which are based on a small network and which add neurons, have a series of benefits over pruning strategies (which are based on a large number of units which are progressively eliminated).

The following algorithm has been chosen for the preferred implementation of the invention:

The algorithm can be divided into two phases: one network growth phase and another pruning phase. During the growth phase, the network is first initiated with a small number of hidden neurons. In principle, one.

This architecture is then trained using the backpropagation algorithm and the reduction of the mean square error is checked every one hundred epochs. If the error has decreased by more than one percent, nothing is done and the training is continued. However, if a local minimum is reached and the error decreases by one percent or less, a new neuron is added to the hidden layer. The weights of this hidden unit will be run at random. This situation will be repeated until the neural network converges. The convergence criterion that is used is based on a threshold specified for the mean square error, calculated in the training set. When the threshold is exceeded, the neural network is considered as having converged.

Once the network has converged, we move on to the pruning phase. This phase aims to reduce the number of hidden neurons that may have shown excessive growth in the previous phase. The phase begins by saving on disk the initial data on weights and by eliminating one hidden neuron. The neuron that was most recently added in the growth phase is eliminated. Once this neuron is removed, the network is re-trained using backpropagation. Once again, the mean square error is checked every one hundred epochs and if it has decreased by over one percent, the training continues. If it has decreased by less than one percent, convergence is checked; if the network has converged without a reduction of the mean square error, the neuron has been successfully removed and another one can be removed. However, if convergence has not been achieved without a reduction of the mean square error, the valid number of neurons was that which we had before elimination and the data stored on disk is recovered.

Obviously, as in any profile identification process, the number of trial runs for the learning will depend on the precision of the identification. With regard to this patent, it will depend on the degree of uniformity of composition that is required from the product.

The data corresponding to the activity of the identified user are stored on a memory device.

3. Removal of the bag: once the waste has been classified, the operating system gives the order to open the base of the entry compartment and the containment bag is removed by a bag-separating device consisting of a system of knives that break the bag and two rollers that remove it, storing it in a bag deposit. The waste then falls freely onto the transporter belt **6.**

4. Transporting the waste to the corresponding container **10:** the transporter belt 6 is equipped with dividers that stop dispersion of the waste. The signal received from the ultrasonic identifier activates movement of the belt **6,** transporting the waste to the corresponding container. There is a piston **5** opposite the entrance to each container which, activated by the recognition signal, pushes the waste inside the container. The belt **6** has a self-cleaning system that guarantees no waste is left on the belt.

The containers have a mechanism that pushes waste to the opposite side to the falling waste to optimise filling. They are also equipped with sensors that indicate how full they are. When a container is filled to a prefixed level, a warning signal is issued for it to be moved to the place of use.

**Claims**

1. A waste material classification system **characterised by** the following features:

- a number of ultrasonic transmitters (2) located on different planes, each configured to emit a signal directed at the material;
- methods for weighing the material;
- a number of ultrasonic receivers (3), each configured to receive the signal reflected by or transmitted through the material;
- processing methods configured to calculate the speed of propagation and the reduction in amplitude of the received signal and to compare with a number of patterns corresponding to different types of waste through an artificial neural network in order to classify the material.

2. System according to claim 1, where the neural network has three layers: an input layer with a number of input neurons, where each neuron is associated with a signal received by a receiver or with the weight of the material; a second hidden layer with hidden neurons interconnected with a number of input layer neurons; and an output layer with a number of output neurons, where each neuron is associated with a class.

3. System according to claim 1 or 2, where the frequency of the ultrasonic transmitters (2) is between 20 kHz and 1 MHz.

4. System according to any of the above claims, which comprises a number of buried containers (10) each configured to store a different type of waste under the ground.

5. System according to claim 4 also comprising an entry slot (4), a transporter belt (6) and a piston (5) for pushing the classified material into the corresponding container (10).

6. System according to claim 5, which also comprises various identification methods (1) to open the access slot (4).

7. System according to claim 6, where the identification methods (1) are either a card reader, a keypad to enter a numeric code or a fingerprint reader.

Fig. 1

Fig. 2

Europäisches
Patentamt

European
Patent Office

Office européen
des brevets

# EUROPEAN SEARCH REPORT

Application Number

EP 15 38 2171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 684 191 A1 (RUDOLPH KLAUS [DE]) 29 November 1995 (1995-11-29) * claims 1,5 * | 1-7 | INV. B65F1/00 B65F1/14 |
| A | US 5 257 577 A (CLARK MELVIN D [US]) 2 November 1993 (1993-11-02) * claim 1 * | 1-7 | |
| A | US 4 332 016 A (BERNTSEN ROBERT G) 25 May 1982 (1982-05-25) * the whole document * | 1-7 | |
| A | FR 2 855 262 A1 (BADAROUX PHILIPPE [FR]; PAQUIER DOMINIQUE [FR]; HABIB ERIC [FR]) 26 November 2004 (2004-11-26) * claim 1 * | 1-7 | |
| A | JP H08 301406 A (JAPAN STEEL & TUBE CONSTR; NIPPON KOKAN KK) 19 November 1996 (1996-11-19) * abstract * | 1-7 | TECHNICAL FIELDS SEARCHED (IPC) B65F |

The present search report has been drawn up for all claims

| Place of search | Date of completion of the search | Examiner |
|---|---|---|
| Munich | 22 June 2015 | Devilers, Erick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 38 2171

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2015

| Patent document cited in search report | | | Publication date | Patent family member(s) | | | Publication date |
|---|---|---|---|---|---|---|---|
| EP 0684191 | | A1 | 29-11-1995 | NONE | | | |
| US 5257577 | | A | 02-11-1993 | NONE | | | |
| US 4332016 | | A | 25-05-1982 | DE<br>DK<br>US | 3002262<br>32480<br>4332016 | A1<br>A<br>A | 12-03-1981<br>27-07-1980<br>25-05-1982 |
| FR 2855262 | | A1 | 26-11-2004 | EP<br>FR | 1482285<br>2855262 | A1<br>A1 | 01-12-2004<br>26-11-2004 |
| JP H08301406 | | A | 19-11-1996 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2139503
- ES 2378615
- WO 2011070603 A
- EP 0799152 A